(19) Europäisches Patentamt
European Patent Office
Office européen des brevets

(11) **EP 3 581 962 A1**

(12) **EUROPÄISCHE PATENTANMELDUNG**

(43) Veröffentlichungstag:
**18.12.2019 Patentblatt 2019/51**

(51) Int Cl.:
*G01S 17/32* (2006.01)    *G01S 7/497* (2006.01)

(21) Anmeldenummer: **18177135.3**

(22) Anmeldetag: **11.06.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hexagon Technology Center GmbH 9435 Heerbrugg (CH)**

(72) Erfinder: **ROHNER, Marcel CH-9410 Heiden (CH)**

(74) Vertreter: **Kaminski Harmann Patentanwälte AG Landstrasse 124 9490 Vaduz (LI)**

(54) **DUAL-BEAM FMCW DISTANZMESSVERFAHREN MIT KOMPENSATION EINES GESCHWINDIGKEITSABHÄNGIGEN DISTANZMESSFEHLERS**

(57)    Die Erfindung bezieht sich auf ein Distanzmessverfahren sowie einen Distanzmesser für eine Distanzmessung nach dem Prinzip eines modulierten Dauerstrichradars, wobei zumindest ein Teil einer ersten Laserstrahlung, welche eine ein erstes Modulationsband (8A) definierende erste Frequenzmodulation (1A) aufweist, und zumindest ein Teil einer zweiten Laserstrahlung, welche eine ein zweites Modulationsband (8B) definierende zweite Frequenzmodulation (1B) aufweist, als erste beziehungsweise als zweite Sendestrahlung zu einem Ziel ausgesendet werden. Gemäss der vorliegenden Erfindung wird ein Parameter ($t_{TOIF}$) bestimmt, welcher indikativ ist für einen Frequenzoffset zwischen dem ersten (8A) und dem zweiten (8B) Modulationsband, und der Parameter ($t_{TOIF}$) wird beim Bestimmen der wenigstens einen Distanz zum Ziel zum Ableiten eines Frequenzunterschieds (9) zwischen der ersten Frequenzmodulation (1A) und der zweiten Frequenzmodulation (1B) berücksichtigt.

Fig.4

EP 3 581 962 A1

**Beschreibung**

Die Erfindung betrifft ein Distanzmessverfahren für eine Distanzmessung nach dem Prinzip eines modulierten Dauerstrichradars nach dem Oberbegriff des Anspruchs 1 und einen Distanzmesser nach dem Oberbegriff des Anspruchs 8.

Im Bereich der elektronischen Distanzmessung sind verschiedene Prinzipien und Verfahren bekannt. Ein Ansatz besteht darin, frequenzmodulierte elektromagnetische Strahlung als Sendesignal auf das zu vermessende Ziel auszusenden und nachfolgend zumindest einen Teil der vom Ziel zurückkommenden Strahlung als Empfangssignal, auch Echo oder Echosignal genannt, zu empfangen. Das zu vermessende Ziel kann dabei sowohl spiegelnde, beispielsweise bei der Verwendung von Retroreflektoren, als auch diffuse Rückstreucharakteristik aufweisen.

Nach dem Empfang wird das Echosignal mit einem lokalen Oszillatorsignal zur Erzeugung eines Schwebesignals überlagert, wobei das Schwebesignal eine mit der Laufzeit des Sendesignals korrelierende Schwebefrequenz aufweist. Anhand der Schwebefrequenz lässt sich dann die Distanz zum Ziel ableiten.

Die Mischung/Überlagerung dient hauptsächlich dazu, das Empfangssignal zu tieferen Frequenzen zu transformieren und zu verstärken, wodurch die Laufzeit und damit - bei bekannter Ausbreitungsgeschwindigkeit der verwendeten Strahlung - die Distanz zum zu vermessenden Ziel bestimmt werden kann.

So genannte FMCW-Distanzmesser (FMCW: "Frequency Modulated Continuous Wave" Radar), auch modulierte

Dauerstrichradargeräte oder FMCW-Radargeräte genannt, ermöglichen eine Absolutdistanzmessung auf ein zu vermessendes Ziel.

In einer FMCW-Anordnung wird eine durchstimmbare Laserquelle verwendet. In der prinzipiell einfachsten Ausführungsform erfolgt dabei das Durchstimmen der optischen Frequenz der Laserquelle linear und mit einer bekannten Durchstimmrate, wobei jedoch die absolute Wellenlänge des so erzeugten Sendesignals nur bis zu einem gewissen Grad bekannt ist. Das Empfangssignal wird mit einem zweiten Signal, welches vom emittierten Sendesignal abgeleitet wird, überlagert. Die entstehende Schwebungsfrequenz des Mischprodukts, dem Interferogramm, ist ein Mass für die Distanz zum Ziel.

Im Stand der Technik sind diverse Weiterbildungen dieser prinzipiellen Ausführungsform bekannt, beispielsweise eine Verwendung eines Referenzinterferometers um das Durchstimmverhalten des Lasers zu messen.

Die zur Umsetzung dieser Verfahren verwendeten Distanzmessvorrichtungen nutzen üblicherweise einen SignalGenerator, mittels dessen einer modulierbaren Strahlungsquelle ein Signal aufgeprägt wird, beispielsweise eine ansteigende oder fallende Frequenzrampe. Im optischen Bereich werden als Strahlungsquellen zumeist modulierbare Laser eingesetzt. Zur Emission und zum Empfang kommen im optischen Bereich Sende- und Empfangsoptiken zum Einsatz, denen ein Detektor oder Quadraturdetektor zur Heterodynmischung, A/D-Wandler und digitalem SignalProzessor nachgeschaltet ist.

Die Änderung der Frequenz des emittierten Sendesignals stellt den Massstab der Messung dar. Je nach Genauigkeitsanforderung an die Distanzmessung kann dieser Massstab mittels einer zusätzlichen Messung verifiziert oder genauer bestimmt werden. Oft erfordert beispielsweise eine ausreichend lineare Durchstimmung der Laserquelle zusätzlichen Aufwand. Hierzu wird beispielsweise ein Teil der emittierten Strahlung über ein Referenzinterferometer mit definierter Referenzlänge geführt. Aus dem entstehenden Schwebungsprodukt kann aufgrund der bekannten Referenzlänge auf die zeitliche Frequenzänderung des emittierten Sendesignals geschlossen werden. Ist die Referenzlänge nicht bekannt oder instabil, z.B. aufgrund von Temperatureinflüssen, so kann diese über eine zusätzliche Kalibriereinheit, bspw. eine Gaszelle oder ein Fabry-Perot-Element, bestimmt werden.

Im günstigsten Fall handelt es sich beim Ziel um ein relativ zum Distanzmesser ruhendes Ziel, d.h. ein Ziel welches eine zeitlich unveränderliche Distanz zum Distanzmesser aufweist. Mit geeigneten Kompensationsmassnahmen sind jedoch auch Absolutdistanzmessungen auf sich bewegende oder vibrierende Ziele durchführbar.

Eine radiale Bewegung des Ziels relativ zum Distanzmesser führt aufgrund des Dopplereffekts zu einer Dopplerverschiebung der Empfangsfrequenz. Die Dopplerverschiebung kann jedoch beispielsweise durch eine kombinierte Messung mittels aufeinanderfolgenden ansteigenden und abfallenden Frequenzrampen kompensiert werden, da die Dopplerverschiebung im Fall einer konstanten radialen Geschwindigkeit des Ziels für beide Rampen gleich ist, wobei jedoch die durch die beiden Rampen erzeugten Schwebefrequenzen unterschiedliche Vorzeichen haben.

Allerdings wird durch die Verwendung von zeitlich aufeinanderfolgenden gegenläufiger Rampen, d.h. bei aufeinanderfolgenden Variationen des Chirp-Vorzeichens, auch die nutzbare Messrate halbiert. Zudem basiert dieser Ansatz darauf, dass während der Durchlaufzeit für die zwei Rampen eine konstante relative Zielgeschwindigkeit gegeben ist. Diese Annahme einer konstanten relativen Geschwindigkeit des Ziels gegenüber dem Distanzmesser ist jedoch in der Praxis oft nicht zutreffend, wobei Beschleunigungen und/oder Vibrationen des Ziels während des Messvorgangs, Speckle-Effekte, oder andere Effekte zu nicht vernachlässigbaren Messfluktuationen in der Distanzmessung führen.

Um diese Problematik zu beseitigen, werden im Stand der Technik beispielsweise zwei zeitgleiche und gegenläufige Frequenzrampen verwendet, d.h. wobei Strahlung mit zwei Strahlungsanteilen emittiert wird, wobei die Frequenz eines ersten Strahlungsanteils nach "oben", d.h. zu höheren Frequenzen, und gleichzeitig die Frequenz eines zweiten Strahlungsanteils nach "unten", d.h. zu niedrigeren Frequenzen, durchgestimmt wird. Die Anforderung an eine konstante relative Radialgeschwindigkeit des Ziels wird somit auf ein kurzes Zeitfenster begrenzt. Zudem wird durch solche sogenannt gegenläufige Chirps beispielsweise auch eine Verringerung der Meßrate vermieden.

Um die Strahlungsanteile messtechnisch separieren zu können, sind im Stand der Technik verschiedene Massnahmen bekannt, beispielsweise polarisationsbasierte, spektralbasierte, oder algorithmische Trennungen.

Es ist eine Aufgabe der vorliegenden Erfindung, ein verbessertes FMCW-Distanzmessverfahren und einen entsprechenden Distanzmesser bereitzustellen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Distanzmessverfahren mit den Schritten: Erzeugen einer ersten und einer zweiten Laserstrahlung, wobei die erste Laserstrahlung eine ein erstes Modulationsband definierende erste Frequenzmodulation aufweist und die zweite Laserstrahlung eine ein zweites Modulationsband definierende zweite Frequenzmodulation aufweist, wobei zumindest zeitabschnittsweise ein Gradient der ersten Frequenzmodulation unterschiedlich ist zu einem Gradienten der zweiten Frequenzmodulation (d.h. wobei jeweils ein Zeitabschnitt der ersten Frequenzmodulation für eine FMCW-Auswertung (FMCW: Frequenzmoduliertes Dauerstrichradar) mit einem Zeitabschnitt der zweiten Frequenzmodulation korrespondierend ist, insbesondere gleichzeitig ist, und die erste bzw. zweite Frequenzmodulation in diesen jeweiligen Zeitabschnitten jeweils für die FMCW-Auswertung zueinander korrespondierende unterschiedliche Gradienten aufweisen); gleichzeitiges Aussenden von zumindest einem Teil der ersten und von zumindest einem Teil der zweiten Laserstrahlung als erste beziehungsweise als zweite Sendestrahlung zum Ziel; Empfangen von zumindest einem Teil der vom Ziel zurückkommenden ersten und von zumindest einem Teil der vom Ziel zurückkommenden zweiten Sendestrahlung als erste beziehungsweise als zweite Empfangsstrahlung; Erzeugen eines ersten und eines zweiten Mischsignals basierend auf einer Mischung der ersten Empfangsstrahlung mit einer ersten Lokaloszillatorstrahlung beziehungsweise basierend auf einer Mischung der zweiten Empfangsstrahlung mit einer zweiten Lokaloszillatorstrahlung für eine Distanzmessung nach dem Prinzip eines modulierten Dauerstrichradars; und Bestimmen wenigstens einer Distanz zum Ziel basierend auf dem ersten und dem zweiten Mischsignal.

Typischerweise wird zur Durchführung der Distanzmessung nach dem Prinzip eines modulierten Dauerstrichradars beispielsweise zumindest ein Teil der ersten Laserstrahlung bzw. zumindest ein Teil der zweiten Laserstrahlung jeweils einem Lokaloszillator zugeführt, um jeweils die erste bzw. die zweite Lokaloszillatorstrahlung zu erzeugen, d.h. das erste und das zweite Mischsignal repräsentieren jeweils Schwebesignale, deren Schwebefrequenzen jeweils mit der Laufzeit der ersten bzw. der zweiten Sendestrahlung korrelieren.

Alternativ können die Lokaloszillatorstrahlungen jedoch auch durch separate Laserstrahlquellen erzeugt werden.

Das Erzeugen der ersten und der zweiten Laserstrahlung kann beispielsweise derart erfolgen, dass die erste und die zweite Sendestrahlung als zwei separate Sendestrahlen zum Ziel ausgesendet werden oder dass zumindest ein Teil der ersten mit zumindest einem Teil der zweiten Laserstrahlung überlagert ist, so dass die erste und die zweite Sendestrahlung jeweils als eine erste bzw. als eine zweite Strahlkomponente eines gemeinsamen Überlagerungsstrahls ausgesendet werden. Im Speziellen ist es für die Durchführung des erfinderischen Distanzmessverfahrens ausreichend, wenn der gemeinsame Überlagerungsstrahl derart konfiguriert ist, dass die der ersten bzw. der zweiten Strahlkomponente zugeordneten Empfangsfrequenzen empfängerseitig algorithmisch trennbar sind. Eine optische Trennung ist nicht notwendig.

Insbesondere können ferner das erste und das zweite Mischsignal beispielsweise zwei separat erzeugte Signale sein oder das erste und das zweite Mischsignal können zwei unterschiedliche Signalkomponenten eines gemeinsamen Mischsignals sein, erzeugt durch eine gemeinsame Mischung von Teilen der ersten Laserstrahlung, der zweiten Laserstrahlung, der ersten Empfangsstrahlung, und der zweiten Empfangsstrahlung.

Es versteht sich von selbst, dass das Distanzmessverfahren weitere gattungsgemässe für eine Distanzmessung nach dem Prinzip eines modulierten Dauerstrichradars vorteilhafte Verfahrensschritte aus dem Stand der Technik aufweisen kann.

Insbesondere wird beispielsweise die erste und die zweite Laserstrahlung derart erzeugt, dass die zweite Frequenzmodulation mindestens einen Zeitabschnitt mit einer zur Modulationsrichtung der ersten Frequenzmodulation gegenläufigen, insbesondere entgegengesetzt verlaufenden, Modulationsrichtung aufweist, insbesondere wobei die erste und die zweite Frequenzmodulation gemäss eines modulierten Dauerstrichradars mit gegenläufigem Chirp erzeugt werden.

Gemäss der vorliegenden Erfindung wird ferner ein Parameter bestimmt, welcher indikativ ist für einen Frequenzoffset zwischen dem ersten und dem zweiten Modulationsband, und der Parameter wird beim Bestimmen der wenigstens einen Distanz zum Ziel zum Ableiten eines Frequenzunterschieds zwischen der ersten Frequenzmodulation und der zweiten Frequenzmodulation berücksichtigt.

Wie bereits erwähnt, basiert die Distanzmessung bei einem FMCW-Distanzmesser auf der Änderung der Frequenz des emittierten Sendesignals, wohingegen im Stand der Technik typischerweise auf eine genaue Bestimmung der absoluten Frequenz des erzeugten Sendesignals verzichtet wird. Da die Frequenzvariationen oft klein sind, wird zur Vereinfachung der Messauswertung typischerweise stillschweigend die Annahme gemacht, dass die Frequenzen von beispielsweise gegenläufigen Frequenzrampen identisch sind. Diese Annahme führt jedoch streng genommen nur dann zu keinem Distanzmessfehler, wenn die radiale Zielgeschwindigkeit gleich Null ist, wohingegen bei einer nicht vernachlässigbaren Radialgeschwindigkeit ungleich Null jeweils ein Distanzmessfehler auftritt, der abhängig ist von aktuell eingestellten Frequenzwerten der ersten und der zweiten Laserstrahlung, beziehungsweise vom Verlauf der durchgestimmten Frequenzwerte, sowie von der aktuellen Radialgeschwindigkeit.

Dieser so genannte dynamische Fehler kann durch die Erfindung kompensiert werden, wobei der dynamische Fehler in einem ersten Schritt vorrichtungsseitig dadurch reduziert werden kann, indem sichergestellt wird, dass die erste und die zweite Laserstrahlung eine zueinander annähernd gleiche Grundfrequenz aufweisen. Insbesondere werden die erste und die zweite Frequenzmodulation beispielsweise derart relativ zueinander moduliert, dass die erste und die zweite Frequenzmodulation um eine konstante Zentrumsfrequenz erfolgen.

Ferner kann erfindungsgemäss insbesondere ein vereinfachter Abschätzterm zur Kompensation des dynamischen Fehlers verwendet werden, welcher lediglich vom Frequenzunterschied zwischen der ersten und der zweiten Frequenzmodulation abhängt, wobei auf eine Bestimmung der absoluten Frequenzen der ersten und der zweiten Frequenzmodulation verzichtet werden kann.

Gemäss einer Ausführungsform ist der Parameter, welcher indikativ ist für einen Frequenzoffset zwischen dem ersten und dem zweiten Modulationsband, ein Kreuzungszeitpunkt, an dem die erste und die zweite Laserstrahlung dieselbe Frequenz aufweisen.

Der Kreuzungszeitpunkt kann beispielsweise aus einem Interferenzverlauf einer Überlagerung von zumindest einem Teil der ersten und zumindest einem Teil der zweiten Laserstrahlung bestimmt werden. Die beiden Laserstrahlen weisen an einem Kreuzungspunkt dieselbe Frequenz auf, wobei beispielsweise ein Interferenzsignal aus einer Überlagerung von Lokaloszillatoren der ersten und der zweiten Laserstrahlung am Kreuzungszeitpunkt einen starken Interferenzausschlag aufweist. Der Zeitpunkt des Auftretens dieses Interferenzausschlags, auch Interferenzzeitpunkt genannt, kann mit relativ einfachen Mitteln bestimmt werden, beispielsweise basierend auf einem Schwellenwert für die Interferenzsignalstärke des Interferenzverlaufs.

Zum Beispiel kann basierend auf einem definierten Messintervall mit einem bekannten Zeitversatz zum Kreuzungspunkt ein Näherungswert für die tatsächliche Frequenzdifferenz zwischen der ersten und der zweiten Frequenzmodulation zu einem Zeitpunkt innerhalb des Messintervalls bestimmt werden, basierend auf bekannten Parametern der der ersten und der zweiten Frequenzmodulation.

Beispielsweise wird der Frequenzunterschied zwischen der ersten und der zweiten Frequenzmodulation basierend auf dem Parameter, welcher indikativ ist für einen Frequenzoffset zwischen dem ersten und dem zweiten Modulationsband, sowie einem ersten Verlaufsparameter bezüglich der ersten Frequenzmodulation und einem zweiten Verlaufsparameter bezüglich der zweiten Frequenzmodulation bestimmt, wobei insbesondere der erste Verlaufsparameter indikativ ist für einen Gradienten der ersten Frequenzmodulation und/oder der zweite Verlaufsparameter indikativ ist für einen Gradienten der zweiten Frequenzmodulation.

Insbesondere erfolgt das Bestimmen der wenigstens einen Distanz während eines Messintervalls, wobei das Messintervall und die erste und die zweite Frequenzmodulation derart aufeinander abgestimmt sind, dass die erste und die zweite Sendestrahlung während des Messintervalls jeweils eine im Wesentlichen lineare Frequenzmodulation aufweisen.

Ferner erfolgt gemäss einer weiteren Ausführungsform eine Referenzierung des Frequenzverlaufs der ersten und/oder der zweiten Frequenzmodulation bezüglich eines Referenzparameters eines Referenzinterferometers, wobei basierend auf der Referenzierung beim Bestimmen der wenigstens einen Distanz Nichtlinearitäten beim Erzeugen der ersten und/oder der zweiten Frequenzmodulation kompensiert werden. Somit kann beispielsweise die Genauigkeit der Abschätzung des Näherungswertes für die tatsächliche Frequenzdifferenz zwischen der ersten und der zweiten Frequenzmodulation erhöht werden, indem beispielsweise eine ausreichend lineare Durchstimmung der Laserquelle sichergestellt wird.

Die Erfindung betrifft ferner einen Distanzmesser mit einer Laserstrahlquelle konfiguriert zum Erzeugen einer ersten und einer zweiten Laserstrahlung, wobei die erste Laserstrahlung eine ein erstes Modulationsband definierende erste Frequenzmodulation aufweist und die zweite Laserstrahlung eine ein zweites Modulationsband definierende zweite Frequenzmodulation aufweist, und wobei zumindest zeitabschnittsweise ein Gradient der ersten Frequenzmodulation unterschiedlich ist zu einem Gradienten der zweiten Frequenzmodulation. Ferner weist der Distanzmesser auf: einen Sendepfad konfiguriert zum gleichzeitigen Aussenden von zumindest einem Teil der ersten und von zumindest einem Teil der zweiten Laserstrahlung als erste beziehungsweise als zweite Sendestrahlung zum Ziel; einen Empfänger konfiguriert zum Empfangen von zumindest einem Teil der vom Ziel zurückkommenden ersten und von zumindest einem Teil der vom Ziel zurückkommenden zweiten Sendestrahlung als erste beziehungsweise als zweite Empfangsstrahlung;

einen Mischer konfiguriert zum Erzeugen eines ersten und eines zweiten Mischsignals basierend auf einer Mischung der ersten Empfangsstrahlung mit einer ersten Lokaloszillatorstrahlung beziehungsweise basierend auf einer Mischung der zweiten Empfangsstrahlung mit einer zweiten Lokaloszillatorstrahlung für eine Distanzmessung nach dem Prinzip eines modulierten Dauerstrichradars; und eine Recheneinheit konfiguriert zum Bestimmen wenigstens einer Distanz zum Ziel basierend auf dem ersten und dem zweiten Mischsignal.

Es versteht sich von selbst, dass der Distanzmesser weitere gattungsgemässe für eine Distanzmessung nach dem Prinzip eines modulierten Dauerstrichradars vorteilhafte Eigenschaften und Komponenten aus dem Stand der Technik aufweisen kann. Insbesondere können die erste bzw. die zweite Lokaloszillatorstrahlung jeweils aus der ersten bzw. zweiten Laserstrahlung erzeugt werden, wobei Teile der ersten bzw. zweiten Laserstrahlung jeweils über eine lokale Oszillatorstrecke geführt werden, oder die Lokaloszillatorstrahlungen können auch durch separate Laserstrahlquellen erzeugt werden.

Die Laserstrahlquelle und der Sendepfad können beispielsweise derart konfiguriert sein, dass das Erzeugen der ersten und der zweiten Laserstrahlung derart erfolgt, dass die erste und die zweite Sendestrahlung als zwei separate Sendestrahlen zum Ziel ausgesendet werden oder dass zumindest ein Teil der ersten mit zumindest einem Teil der zweiten Laserstrahlung überlagert ist, so dass die erste und die zweite Sendestrahlung jeweils als eine erste bzw. als eine zweite Strahlkomponente eines gemeinsamen Überlagerungsstrahls ausgesendet werden. Im Speziellen ist es ausreichend, wenn der gemeinsame Überlagerungsstrahl derart konfiguriert ist, dass die der ersten bzw. der zweiten Strahlkomponente zugeordneten Empfangsfrequenzen empfängerseitig algorithmisch trennbar sind.

Ferner können das erste und das zweite Mischsignal beispielsweise zwei separat erzeugte Signale sein oder das erste und das zweite Mischsignal können zwei unterschiedliche Signalkomponenten eines gemeinsamen Mischsignals sein, erzeugt durch eine gemeinsame Mischung von Teilen der ersten Laserstrahlung, der zweiten Laserstrahlung, der ersten Empfangsstrahlung, und der zweiten Empfangsstrahlung.

Gemäss der vorliegenden Erfindung ist die Recheneinheit konfiguriert, um einen Parameter zu bestimmen, welcher indikativ ist für einen Frequenzoffset zwischen dem ersten und dem zweiten Modulationsband, und um den Parameter beim Bestimmen der wenigstens einen Distanz zum Ziel zum Ableiten eines Frequenzunterschieds zwischen der ersten Frequenzmodulation und der zweiten Frequenzmodulation zu berücksichtigen.

Insbesondere ist der erfindungsgemässe Distanzmesser konfiguriert, die obig beschriebene Distanzmessmethode durchzuführen.

Im Speziellen ist der Distanzmesser gemäss einer Ausführungsform konfiguriert, dass die zweite Frequenzmodulation mindestens einen Zeitabschnitt mit einer zur Modulationsrichtung der ersten Frequenzmodulation gegenläufigen, insbesondere entgegengesetzt verlaufenden, Modulationsrichtung aufweist.

In einer Ausführungsform ist der Parameter, welcher indikativ ist für einen Frequenzoffset zwischen dem ersten und dem zweiten Modulationsband, ein Kreuzungszeitpunkt an dem die erste und die zweite Frequenzmodulation dieselbe Frequenz aufweisen.

Beispielsweise weist der Distanzmesser dazu in einer weiteren Ausführungsform eine Interferometeranordnung auf, welche konfiguriert ist zum Erzeugen eines Interferenzverlaufs einer Überlagerung von zumindest einem Teil der ersten und zumindest einem Teil der zweiten Laserstrahlung, und die Recheneinheit ist konfiguriert, um den Kreuzungszeitpunkt aus dem Interferenzverlauf zu bestimmen.

Zum Beispiel ist auf der Recheneinheit ein Schwellenwert für die Interferenzsignalstärke des Interferenzverlaufs hinterlegt, insbesondere einstellbar, und der Kreuzungszeitpunkt wird basierend auf dem Schwellenwert und dem Interferenzverlauf bestimmt.

Unter Umständen reicht es aus, wenn die zeitliche Abhängigkeit der Frequenzen der ersten und der zweiten Laserstrahlung aus bekannten Komponentenspezifikationen und Steuersignalen des Distanzmessers abgeleitet wird, beispielsweise basierend auf einer bekannten Ansteuerung eines Signalgenerators des Distanzmessers zum Erzeugen der ersten und der zweiten Frequenzmodulation.

Beispielsweise ist auf der Recheneinheit gemäss einer weiteren Ausführungsform ein erster Verlaufsparameter bezüglich der ersten Frequenzmodulation und ein zweiter Verlaufsparameter bezüglich der zweiten Frequenzmodulation hinterlegt, und die Recheneinheit ist konfiguriert, den Frequenzunterschied zwischen der ersten und der zweiten Frequenzmodulation basierend auf dem Parameter, welcher indikativ ist für einen Frequenzoffset zwischen dem ersten und dem zweiten Modulationsband, sowie dem ersten und dem zweiten Verlaufsparameter zu bestimmen.

Zum Beispiel ist der erste Verlaufsparameter indikativ für einen Gradienten der ersten Frequenzmodulation und/oder der zweite Verlaufsparameter ist indikativ für einen Gradienten der zweiten Frequenzmodulation.

Zur Steigerung der Genauigkeit oder für ein Gerätemonitoring, beispielsweise zum Erfassen von Alterungsprozessen des Distanzmessers, können jedoch zusätzliche Anordnungen zum Bestimmen der ersten und der zweiten Frequenzmodulation im Distanzmesser verbaut sein.

Zum Beispiel weist der Distanzmesser gemäss einer weiteren Ausführungsform ein Referenzinterferometer auf, das konfiguriert ist zum Durchführen einer Referenzierung des Frequenzverlaufs der ersten und/oder der zweiten Frequenzmodulation bezüglich eines Referenzparameters des Referenzinterferometers, wobei die Recheneinheit konfiguriert ist, basierend auf der Referenzierung beim Bestimmen der wenigstens einen Distanz Nichtlinearitäten beim Erzeugen der ersten und/oder der zweiten Frequenzmodulation zu kompensieren.

In einer weiteren Ausführungsform ist der Distanzmesser konfiguriert, um einen dritten Verlaufsparameter bezüglich der ersten Frequenzmodulation und einen vierten Verlaufsparameter bezüglich der zweiten Frequenzmodulation zu bestimmen und den Frequenzunterschied zwischen der ersten und der zweiten Frequenzmodulation basierend auf dem Parameter, welcher indikativ ist für einen Frequenzoffset zwischen dem ersten und dem zweiten Modulationsband, sowie dem dritten und dem vierten Verlaufsparameter zu bestimmen.

Das erfindungsgemässe Verfahren und der erfindungsgemässe Distanzmesser werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen

Fig. 1: Darstellung der zeitlichen Abhängigkeit der Sende- und Empfangsfrequenz eines modulierten Dauerstrichradars mit ansteigender und abfallender Frequenzrampe;

Fig. 2: Sende- und Empfangsfrequenz eines modulierten Dauerstrichradars mit gegenläufigem Chirp;

Fig. 3a,b: schematische Illustration von unterschiedlichen Frequenzoffsets zwischen dem ersten und dem zweiten Modulationsband;

Fig. 4: schematische Darstellung der Parameter einer erfindungsgemässen Kompensation des dynamischen Fehlers bei einer FMCW-Distanzmessung mit gegenläufigem Chirp;

Fig. 5: schematische Darstellung eines Interferogramms aus einer Überlagerung von Lokaloszillatoren der beiden FMCW-Strahlungsanteile zur Bestimmung des Kreuzungszeitpunktes der beiden Strahlungsanteile;

Fig. 6: Illustration eines beispielhaften Messablaufs zur Bestimmung eines Näherungswertes für die Frequenzdifferenz zwischen den beiden FMCW-Laserstrahlen.

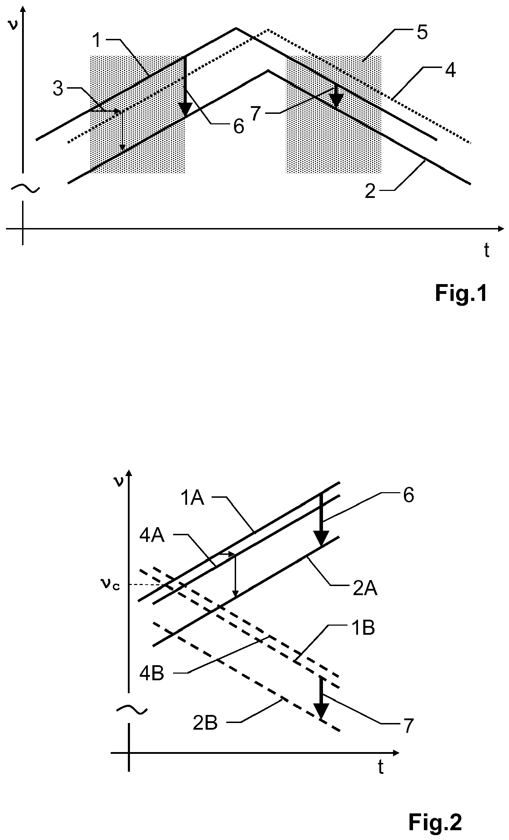

Die **Figur 1** zeigt schematisch die zeitliche Abhängigkeit der Frequenz der Sendestrahlung 1 und der Empfangsstrahlung 2 eines modulierten Dauerstrichradars mit ansteigender und abfallender Frequenzrampe, auch FMCW-Radargerät genannt, welches eine Absolutdistanzmessung auf ein zu vermessendes Ziel ermöglicht.

Frequenzmodulierte elektromagnetische Strahlung wird als Sendesignal auf das zu vermessende Ziel ausgesendet und nachfolgend zumindest ein Teil der vom Ziel zurückkommenden Strahlung als Echosignal empfangen. Das zu vermessende Ziel kann dabei sowohl spiegelnde als auch diffuse Rückstreucharakteristik aufweisen. Nach dem Empfang wird das Echosignal beispielsweise mit einem lokalen Oszillatorsignal zur Erzeugung eines Interferogramms überlagert, wobei aus dem Interferogramm die Laufzeit des Sendesignals und damit die Distanz zum Ziel abgeleitet werden kann, beispielsweise über eine mit der Laufzeit korrelierende Schwebefrequenz.

Die von dem FMCW-Distanzmesser erzeugte Strahlung wird durch einen Signalgenerator frequenzmoduliert, so dass beispielsweise ansteigende und abfallende Rampen im zeitlichen Verlauf t der Frequenz v entstehen. Typischerweise werden eine aufsteigende und eine absteigende Frequenzrampe mit jeweils zugeordneten Messbereichen verwendet um Doppler-Effekte zu kompensieren, da mit nur einer einzelnen, beispielsweise aufsteigenden Frequenzrampe, gemessene Frequenzänderungen der Schwebefrequenz nicht eindeutig einem Distanzbeitrag oder einem Geschwindigkeitsbeitrag des Ziels bzw. des Distanzmessers zugeordnet werden können.

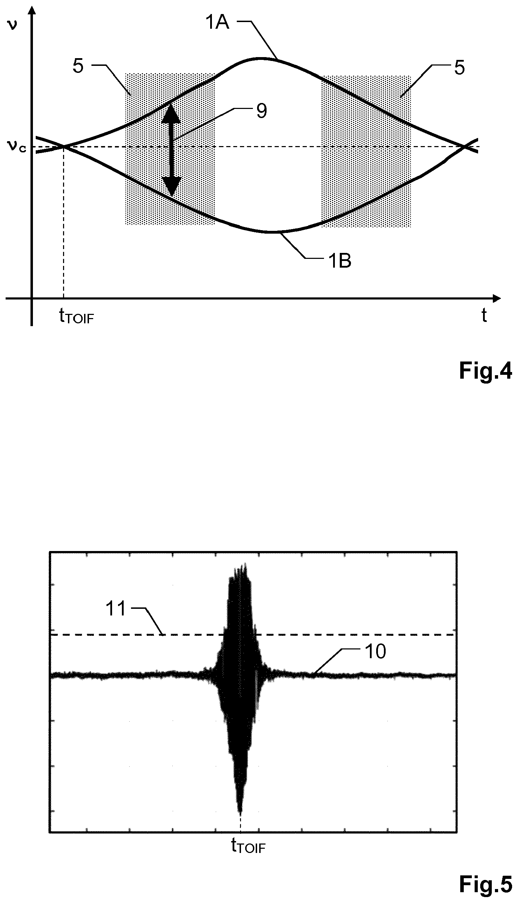

Während der Laufzeit 3 des Sendesignals zum Ziel und zurück verändert sich die Frequenz des Senders. Ohne Berücksichtigung des Dopplereffekts würde also eine mit der Zeit verschobene Abbildung 4 des Frequenzverlaufs der Sendestrahlung entstehen, wohingegen die mit der Zeit verschobene Abbildung 4 unter Berücksichtigung des Dopplereffekts zusätzlich in Frequenzrichtung verschoben wird. Die Distanzmessung erfolgt bezüglich den ebenfalls in der Figur dargestellten Messbereichen 5 für die ansteigende bzw. die abfallende Frequenzrampe.

Durch die Verwendung einer ansteigenden und einer abfallenden Frequenzrampe, beispielsweise mittels einer dreieckförmigen Frequenzmodulation wie in der Figur dargestellt, kann die Dopplerfrequenz als Mass für eine relative Radialgeschwindigkeit des Ziels als unabhängige Messgrösse neben der Entfernungsmessung ermittelt werden.

Bewegt sich das Ziel beispielsweise radial vom Distanzmesser weg, so vermindert sich gemäss einem rein exemplarischen Beispiel für die aufsteigende Rampe die Empfangsfrequenz 2 um die Dopplerfrequenz und der Differenzfrequenzbetrag 6 der aufsteigenden Rampe, d.h. der Betrag zwischen der Sendefrequenz 1 und der Empfangsfrequenz 2 in der aufsteigenden Rampe, wird vergrössert, wohingegen sich der Differenzfrequenzbetrag 7 der fallenden Rampe vermindert.

Da der durch den Dopplereffekt eingeführte Frequenzoffset, bei konstanter Radialgeschwindigkeit, für die steigende und die fallende Rampe identisch ist, ist beispielsweise bei betragsmässig gleicher Steilheit der Frequenzmodulation in der aufsteigenden und der fallenden Rampe die Differenz der Differenzfrequenzen bezüglich steigender und fallender Rampen ein Entfernungsmass, unabhängig von der Radialgeschwindigkeit, wohingegen der Mittelwert der Differenzfrequenzen ein Mass für die Radialgeschwindigkeit des Ziels ist.

Eine zeitliche Trennung zwischen der ansteigenden und der fallenden Frequenzrampe setzt jedoch voraus, dass die relative Radialgeschwindigkeit des Ziels während der Distanzmessung konstant ist. In der Praxis ist diese Annahme jedoch oft nicht gegeben und Objektvibrationen, Speckle-Effekte oder andere Effekte welche die interferometrische Phase stören, können zu nicht vernachlässigbaren Fluktuationen der gemessenen Distanz führen.

Im Stand der Technik werden deshalb oft FMCW-Distanzmesser mit so genannt gegenläufigem Chirp verwendet, d.h. wobei beispielsweise mittels zwei Laserstrahlen oder zwei Laserstrahlanteilen die steigende und die fallende Frequenzrampe im Wesentlichen gleichzeitig ausgesendet werden. Die Voraussetzung einer konstanten Radialgeschwindigkeit muss dann nur noch innerhalb eines kurzen Zeitfensters erfüllt sein.

**Figur 2** zeigt schematisch die Sende- und Empfangsfrequenz eines modulierten Dauerstrichradars mit gegenläufigem Chirp. Die auf ein Ziel emittierte Strahlung weist dabei zwei Strahlungsanteile mit unterschiedlichen zeitlichen Variationen der Frequenz v, d.h. gegenläufigen Frequenzrampen 1A,1B, auf.

Zum Beispiel können dabei die Strahlungsanteile als zwei überlappende Laserstrahlen mit einem Phasenversatz des gegenläufigen Chirps von exakt 180°, also streng gegenphasig, ausgesendet werden. Die Modulationstiefe der beiden Laserstrahlen kann unterschiedlich sein. Insbesondere ist es auch möglich, eine Quelle nicht zu modulieren, entsprechend der Kombination des Frequenzmodulationsverfahrens mit einem klassischen inkrementellen Interferometer. Werden beide Laserstrahlen über eine gemeinsame Optik auf ein gemeinsames Ziel emittiert bzw. durch diese empfangen, so muss empfängerseitig zur Auswertung der beiden Laserstrahlen eine Trennung in zwei jeweils den gegenläufigen Sendefrequenzen 1A, 1B zugeordnete Empfangsfrequenzen 2A,2B ermöglicht werden, was im Stand der Technik beispielsweise algorithmisch oder durch eine unterschiedliche Polarisation der Laserstrahlen gelöst wird.

Zur Illustration des FMCW-Prinzips und der Dopplerverschiebung sind in der Figur ferner, analog zur Fig. 1, zusätzlich zu den Doppler-verschobenen Empfangsfrequenzen 2A,2B wiederum auch die in der Zeit verschobenen virtuellen Abbildungen 4A,4B der gegenläufig modulierten Sendefrequenzen 1A, 1B ohne Berücksichtigung des Dopplereffekts dargestellt.

Analog zur Verwendung von sequentiellen Frequenzrampen wie in Fig. 1 dargestellt, ist bei betragsmässig gleicher Steilheit der Frequenzmodulation in der aufsteigenden und der fallenden Rampe die Differenz der Differenzfrequenzen 6,7 zwischen Sende- und Empfangsfrequenz ein Entfernungsmass, unabhängig von der Radialgeschwindigkeit.

Der Unterschied der Modulationsfrequenzen zwischen den beiden Laserstrahlen ist typischerweise gering, weshalb die absoluten Frequenzen der beiden Laserstrahlen in herkömmlichen FMCW-Distanzmessern oft nicht berücksichtigt werden. Dies führt jedoch dazu, dass bei einer relativen Radialgeschwindigkeit grösser als Null ein von der relativen Radialbewegung des Ziels abhängiger Distanzmessfehler entsteht. Dieser so genannte dynamische Fehler, welcher abhängig ist von aktuell eingestellten Frequenzwerten der ersten und der zweiten Frequenzmodulation, beziehungsweise vom Verlauf der durchgestimmten Frequenzwerte, kann erfindungsgemäss dadurch reduziert werden, indem sichergestellt wird, dass die den Sendefrequenzen 1A, 1B zugrunde liegenden Grundfrequenzen der beiden Laserstrahlen annähernd gleich sind, insbesondere wobei die beiden Sendefrequenzen 1A, 1B relativ, im Speziellen spiegelsymmetrisch, zu einer konstanten Zentrumsfrequenz $v_c$ durchgestimmt werden.

Insbesondere kann erfindungsgemäss ein vereinfachter Abschätzterm zur Kompensation des dynamischen Fehlers verwendet werden, der lediglich vom Frequenzunterschied zwischen den beiden gegenläufig modulierten Sendefrequenzen 1A, 1B, abhängt, so dass auf eine Bestimmung von absoluten Werten für die Sendefrequenzen 1A,1B verzichtet werden kann.

Beispielsweise kann bei einer Modulation der Sendefrequenzen 1A, 1B um eine konstante Zentrumsfrequenz $v_c$ ein Abschätzterm abgeleitet werden, welcher von einer Frequenzdifferenz der modulierten Sendefrequenzen 1A, 1B zur Zentrumsfrequenz $v_c$ abhängt. Die Zentrumsfrequenz $v_c$ ist oft bereits konstruktionsbedingt mit ausreichender Genauigkeit bekannt, weshalb es erfindungsgemäss also ausreichend ist, wenn für eine Kompensation des dynamischen Fehlers lediglich ein relativer Frequenzunterschied zwischen den beiden gegenläufig modulierten Sendefrequenzen 1A, 1B bestimmt und berücksichtigt wird, anstatt einer Bestimmung der absoluten Frequenzen der beiden Sendestrahlen.

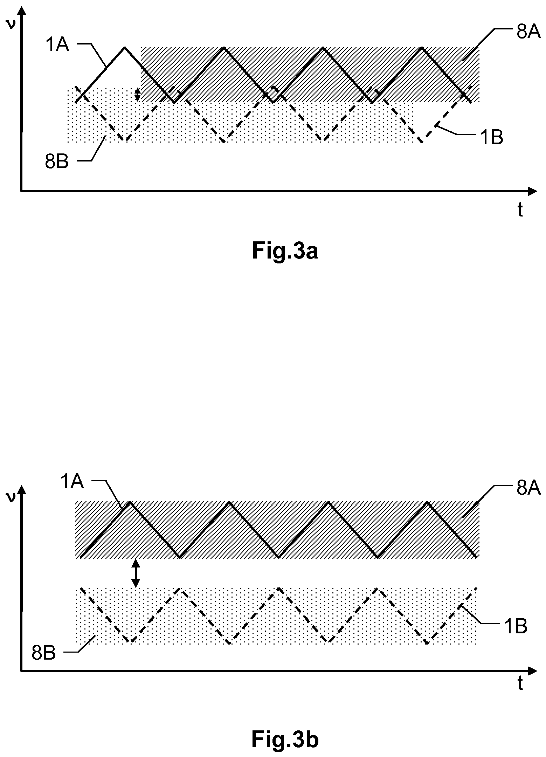

Die **Figuren 3a und 3b** zeigen jeweils schematisch die zeitliche Abhängigkeit von gegenläufig modulierten Sendefrequenzen 1A,1B (Fig. 2) eines FMCW-Distanzmessers mit gegenläufigem Chirp, wobei unterschiedliche Frequenzoffsets zwischen dem durch die erste Frequenzmodulation erzeugten ersten Modulationsband 8A und dem durch die zweite Frequenzmodulation erzeugten zweiten Modulationsband 8B dargestellt sind.

Der jeweilige relative Frequenzverlauf der Sendefrequenzen 1A,1B, d.h. der Verlauf der Frequenzänderungen der Sendefrequenzen 1A, 1B, kann während des Betriebs typischerweise bereits ausreichend genau aus den Steuersignalen der Ansteuerelektronik des Signalgenerators und aus den Spezifikationen der Laserquelle abgeleitet werden.

Darüber hinaus können verschiedene aus dem Stand der Technik bekannte Anordnungen von Referenzinterferometern zur Kompensation von Nichtlinearitäten beim Erzeugen der Frequenzmodulation oder anderen den Frequenzverlauf verfälschenden Effekten verwendet werden.

Dies bedeutet also, dass die Sendefrequenzen 1A, 1B jeweils innerhalb eines definierten Modulationsbandes 8A,8B mit typischerweise bekannter Frequenzbandbreite moduliert werden. Eine absolute Frequenzzuordnung zu den jeweiligen Modulationsbändern 8A,8B der Sendefrequenzen 1A, 1B ist jedoch meist nur bedingt möglich. Zum Beispiel können Einstellparameter der Ansteuerelektronik, Umgebungseinflüsse wie z.B. die Temperatur, oder Alterungsprozesse einzelner Komponenten des FMCW-Distanzmessers den absoluten Frequenzbezug der Sendefrequenzen 1A, 1B verändern.

Erfindungsgemäss wird deshalb ferner ein Parameter bestimmt, welcher indikativ ist für einen Frequenzoffset zwischen den beiden jeweils durch die Modulation der Sendefrequenzen 1A, 1B definierten Modulationsbändern 8A,8B. Basierend auf diesem Parameter werden relative Frequenzunterschiede zwischen den beiden gegenläufig modulierten Sendefrequenzen 1A, 1B bestimmt und mittels eines vereinfachten Abschätzterms zur Kompensation des dynamischen Fehlers in der FMCW-Distanzmessung berücksichtigt. Insbesondere ist also erfindungsgemäss keine Bestimmung der absoluten Frequenzen der beiden Sendefrequenzen notwendig.

Figur 3a zeigt eine Situation, wobei sich die Frequenzbänder 8A,8B noch überlappen. Dadurch kann beispielsweise - wie bezüglich Figur 4 beschrieben - als Parameter, welcher indikativ ist für einen Frequenzoffset zwischen dem ersten und dem zweiten Modulationsband, der Kreuzungszeitpunkt der beiden Sendefrequenzen 1A, 1B bestimmt werden. Die Distanzmessmethode gemäss der vorliegenden Erfindung liesse sich jedoch auch auf eine Situation gemäss Figur 3b anwenden, wobei die beiden Frequenzbänder 8A,8B keinen Überlapp aufweisen.

**Figur 4** zeigt schematische Frequenz-Durchstimmkurven von zwei gegenläufig modulierten Sendefrequenzen 1A, 1B in einer FMCW-Distanzmessung mit gegenläufigem Chirp und einer Kompensation des dynamischen Fehlers gemäss der vorliegenden Erfindung. Der Einfachheit halber werden dabei die beiden Sendefrequenzen 1A, 1B der beiden Laserstrahlen durch einen Signalgenerator im Wesentlichen spiegelsymmetrisch zu einer Zentrumsfrequenz $v_c$ frequenzmoduliert. Dadurch wird der dynamische Fehler, welcher abhängig ist von den Frequenzwerten der Sendefrequenzen 1A, 1B der beiden Strahlanteile sowie von der relativen Radialgeschwindigkeit des Ziels, reduziert.

Wie erwähnt, kann der jeweilige Verlauf der Frequenzänderungen der Sendefrequenzen 1A, 1B während des Betriebs typischerweise bereits ausreichend genau aus Parametern des Distanzmessers und/oder mittels dafür vorgesehenen Messanordnungen abgeleitet werden und die Sendefrequenzen 1A, 1B werden jeweils innerhalb eines definierten Modulationsbandes 8A,8B (Fig. 3a) mit typischerweise bekannter Frequenzbandbreite moduliert. Allerdings ist eine absolute Frequenzzuordnung zu den jeweiligen Modulationsbändern der Sendefrequenzen 1A, 1B meist nur bedingt möglich.

Zum Beispiel wird nun jedoch erfindungsgemäss ein Parameter bestimmt, mittels dessen ein relativer Frequenzunterschied 9 der beiden Sendefrequenzen 1A, 1B abgeleitet werden kann.

Zum Beispiel weisen die beiden Laserstrahlen an einem Kreuzungspunkt der beiden Sendefrequenzen 1A, 1B dieselbe Frequenz auf, wobei beispielsweise ein Interferenzsignal 10 aus einer Überlagerung von Lokaloszillatoren der beiden Strahlungsanteile, wie in **Figur 5** dargestellt, am Kreuzungszeitpunkt einen starken Interferenzausschlag aufweist und der Zeitpunkt des Auftretens des Interferenzausschlags $t_{TOIF}$ ("Interferenzzeitpunkt") mit relativ einfachen Mitteln, beispielsweise basierend auf einem definierten Schwellwert 11 für das Interferenzsignal 10, erfasst werden kann.

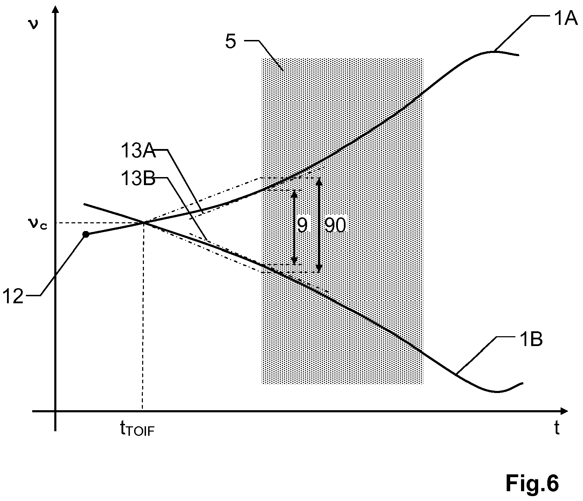

**Figur 6** zeigt einen beispielhaften Messablauf, wobei die Frequenz einer ersten die Sendefrequenz 1A erzeugenden Laserstrahlung durchgestimmt wird, so dass der Interferenzzeitpunkt $t_{TOIF}$ in der Nähe eines Frequenzwendepunkts 12 der ersten (oder zweiten) Sendefrequenz 1A aber ausserhalb des Messintervalls 5 liegt. Aufgrund des erfassten Interferenzzeitpunkts $t_{TOIF}$ ist nun ein eindeutiger Bezugspunkt bekannt, an dem die beiden Sendefrequenzen 1A, 1B dieselbe Frequenz aufweisen. Das Messintervall 5 hat beispielsweise einen bekannten Zeitversatz zum Interferenzpunkt $t_{TOIF}$, wobei die Frequenzdifferenz zwischen den Sendefrequenzen 1A, 1B innerhalb des Messintervalls ungleich Null ist.

Die tatsächliche Frequenzdifferenz 9 zwischen den beiden gegenläufigen Sendefrequenzen 1A, 1B zu einem Zeitpunkt innerhalb des Messintervalls 5 kann dann beispielsweise mittels eines Näherungswertes 90 bezüglich des Interferenzzeitpunkts $t_{TOIF}$ abgeschätzt werden.

Zum Beispiel wird der Näherungswert 90 basierend auf theoretischen oder mit einem Referenzinterferometer bestimmten Werten der Frequenzgradienten 13A, 13B der ersten und der zweiten Sendefrequenz 1A, 1B sowie einer linearen Approximation bezüglich des Interferenzzeitpunkts $t_{TOIF}$, bestimmt, insbesondere wobei das Durchstimmen der Laserstrahlen innerhalb des Messbereichs 5 im Wesentlichen linear erfolgt.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

Der dynamische Fehler und eine Möglichkeit einer Herleitung eines vereinfachten Abschätzterms zur Kompensation des dynamischen Fehlers lassen sich beispielsweise wie folgt mathematisch beschreiben. Es versteht sich jedoch von selbst, dass diese rein beispielhafte mathematische Beschreibung für die Erfindung in keinerlei Weise als einschränkend zu verstehen ist.

Wie oben beschrieben, ist beispielsweise bei betragsmässig gleicher Steilheit der Frequenzmodulation in der aufsteigenden und der fallenden Rampe die Differenz der Differenzfrequenzen 6,7 (siehe Fig. 2) zwischen Sende- und Empfangsfrequenz ein Entfernungsmass, unabhängig von der Radialgeschwindigkeit.

Der Einfachheit halber wird im Folgenden eine perfekt spiegelsymmetrische dreieckförmige Frequenzmodulation wie in Fig. 2 dargestellt angenommen. Bei einer Überlagerung der jeweiligen Frequenzen der ansteigenden Rampe bzw. der fallenden Rampe mit zugehörigen jeweils aus derselben Strahlungsquelle erzeugten Lokaloszillatorsignalen können die so erzeugten Interferenzfrequenzen, nämlich die Interferenzfrequenz der aufsteigenden Rampe $f_{TA}(t)$ und die Interferenzfrequenz der fallenden Rampe $f_{TB}(t)$, aufgeteilt werden in eine Laufzeitkomponente $f_\tau$ und in eine Dopplerkomponente $f_{\text{Doppler}}$. Zum Beispiel kann $f_{TA}(t)$ dargestellt werden als

$$f_{TA} = \underbrace{\frac{2}{\lambda_A(t)}\frac{d}{dt}r_T(t)}_{=:f_{\text{Doppler}}} - \underbrace{\frac{2r_T(t)}{\lambda_A^2(t)}\frac{d}{dt}\lambda_A(t)}_{=:f_\tau}$$

$$= \underbrace{v_T\frac{2}{\lambda_A(t)}}_{=:f_{\text{Doppler}}} + \underbrace{r_T(t)\frac{2}{c}\frac{d}{dt}v_A(t)}_{=:f_\tau}$$

wobei $r_T$ die Distanz zum Ziel, $v_T$ die Zielgeschwindigkeit, $c$ die Lichtgeschwindigkeit, und $\lambda_A(t)$ die Wellenlänge bzw.

$v_A(t)$ die Frequenz des Laserstrahls, hier des ersten Laserstrahls 1A (Fig. 2), angibt. Falls $\dfrac{d}{dt}v_A(t) = -\dfrac{d}{dt}v_B(t)$ ändert sich für $f_{TB}(t)$ lediglich das Vorzeichen der Laufzeitkomponente.

Entsprechend lassen sich die Interferenzfrequenzen für die aufsteigende und die fallende Rampe schreiben als

$$f_{TA}(t) = v_T(t)\frac{2}{\lambda_A(t)} + r_T(t)\frac{2}{c}\frac{d}{dt}v_A(t)$$

$$f_{TB}(t) = v_T(t)\frac{2}{\lambda_B(t)} + r_T(t)\frac{2}{c}\frac{d}{dt}v_B(t)$$

wodurch ein System von linearen Gleichungen für die Distanz zum Ziel $r_T$ und die Zielgeschwindigkeit $v_T$ gebildet wird, wobei $\lambda_A$, $\lambda_B$ die Wellenlängen bzw. $v_A$, $v_B$ die Frequenzen des ersten und zweiten Laserstrahls 1A, 1B (Fig. 2) sind. Daraus ergibt sich für die Distanz zum Ziel

$$r_T(t) = \frac{c}{2}\frac{\lambda_A(t)f_{TA}(t) - \lambda_B(t)f_{TB}(t)}{\lambda_A(t)\dfrac{d}{dt}v_A(t) - \lambda_B(t)\dfrac{d}{dt}v_B(t)}$$

Unter der Annahme, dass die Variation der Wellenlänge klein ist, d.h. $\lambda \approx \lambda_A(t) \approx \lambda_B(t)$, kann ein erster Abschätzterm $\hat{r}_T(t)$ für die Distanz zum Ziel abgeleitet werden, d.h.

$$\hat{r}_T(t) \overset{\lambda_A(t)\approx\lambda_B(t)}{=} \frac{c}{2}\frac{f_{TA}(t) - f_{TB}(t)}{\dfrac{d}{dt}v_A(t) - \dfrac{d}{dt}v_B(t)}$$

und es folgt

$$\hat{r}_T\left(t\right)=r_T\left(t\right)+c\cdot v_T\left(t\right)\dfrac{\dfrac{1}{\lambda_A\left(t\right)}-\dfrac{1}{\lambda_B\left(t\right)}}{\dfrac{d}{dt}v_A\left(t\right)-\dfrac{d}{dt}v_B\left(t\right)}$$

Diese Gleichung zeigt nun, dass bei einem Wellenlängenunterschied zwischen dem ersten und dem zweiten Laserstrahl 1A, 1B, d.h. bei $\lambda_A \neq \lambda_B$, im Falle einer Zielgeschwindigkeit $v_T$ grösser als Null ein dynamischer Fehler entsteht, welcher abhängig ist von den Frequenzwerten/Wellenlängenwerten des ersten und des zweiten Laserstrahls 1A, 1B.

Obige Gleichung für $r_T$ kann auch als Funktion der optischen Frequenz anstelle der optischen Wellenlänge geschrieben werden, d.h.

$$r_T\left(t\right)=\dfrac{c}{2}\dfrac{v_B\left(t\right)f_{TA}\left(t\right)-v_A\left(t\right)f_{TB}\left(t\right)}{v_B\left(t\right)\dfrac{d}{dt}v_A\left(t\right)-v_A\left(t\right)\dfrac{d}{dt}v_B\left(t\right)}$$

Wenn nun das Durchstimmen der Frequenz der aufsteigenden bzw. der fallenden Rampe basierend auf einer im allgemeinen zeitlich variablen Zentrumsfrequenz $v(t)$ parametrisiert wird, d.h.

$$v_A\left(t\right)=v\left(t\right)+dv\left(t\right)$$

$$v_B\left(t\right)=v\left(t\right)-dv\left(t\right)$$

so folgt

$$r_T\left(t\right)=\dfrac{c}{2}\dfrac{\left(v\left(t\right)-dv\left(t\right)\right)f_{TA}\left(t\right)-\left(v\left(t\right)+dv\left(t\right)\right)f_{TB}\left(t\right)}{\left(v\left(t\right)-dv\left(t\right)\right)\dfrac{d}{dt}\left(v\left(t\right)+dv\left(t\right)\right)-\left(v\left(t\right)+dv\left(t\right)\right)\dfrac{d}{dt}\left(v\left(t\right)-dv\left(t\right)\right)}$$

$$=\dfrac{c}{4}\dfrac{\left\{f_{TA}\left(t\right)-f_{TB}\left(t\right)\right\}-\dfrac{dv\left(t\right)}{v\left(t\right)}\cdot\left\{f_{TA}\left(t\right)+f_{TB}\left(t\right)\right\}}{\dfrac{d}{dt}\left(dv\left(t\right)\right)-\dfrac{dv\left(t\right)}{v\left(t\right)}\dfrac{d}{dt}\left(v\left(t\right)\right)}$$

Wenn die erste und die zweite Laserstrahlung nun relativ zueinander durchgestimmt werden, so ist die Zentrumsfrequenz $v(t)$ konstant und es folgt ein verbesserter zweiter Abschätzterm, welcher von der Frequenzdifferenz $dv(t)$ zwischen der ersten und der zweiten Laserstrahlung und der Zentrumsfrequenz $v(t)$ bzw. der Zentrumswellenlänge $\lambda$ abhängt:

$$r_T(t) = \frac{c}{4} \frac{\{f_{TA}(t) - f_{TB}(t)\} - \frac{dv(t)}{v} \cdot \{f_{TA}(t) + f_{TB}(t)\}}{\frac{d}{dt}(dv(t))}$$

$$= \hat{r}_T(t) - \frac{\lambda}{2} dv(t) \cdot \frac{f_{TA}(t) + f_{TB}(t)}{\frac{d}{dt}v_A(t) - \frac{d}{dt}v_B(t)}$$

Dieser Term stellt eine approximative Korrektur für die zuvor geschätzte Distanz $\hat{r}_T(t)$ dar, welche keine exakte Kenntnis der absoluten Wellenlängen des ersten und des zweiten Laserstrahls 1A, 1B erfordert. Typischerweise ist dabei die Zentrumswellenlänge $\lambda$ konstruktionsbedingt bereits mit ausreichender Genauigkeit bekannt und die Aufgabe besteht also darin, die Frequenzdifferenz $dv(t)$ zu bestimmen.

**Patentansprüche**

1. Distanzmessverfahren mit den Schritten

   • Erzeugen einer ersten und einer zweiten Laserstrahlung, wobei

      ◦ die erste Laserstrahlung eine ein erstes Modulationsband (8A) definierende erste Frequenzmodulation (1A) aufweist, und
      ◦ die zweite Laserstrahlung eine ein zweites Modulationsband (8A) definierende zweite Frequenzmodulation (1B) aufweist, wobei zumindest zeitabschnittsweise ein Gradient der ersten Frequenzmodulation (1A) unterschiedlich ist zu einem Gradienten der zweiten Frequenzmodulation (1B),

   • gleichzeitiges Aussenden von zumindest einem Teil der ersten und von zumindest einem Teil der zweiten Laserstrahlung als erste beziehungsweise als zweite Sendestrahlung zum Ziel,
   • Empfangen von zumindest einem Teil der vom Ziel zurückkommenden ersten und von zumindest einem Teil der vom Ziel zurückkommenden zweiten Sendestrahlung als erste beziehungsweise als zweite Empfangsstrahlung,
   • Erzeugen eines ersten und eines zweiten Mischsignals basierend auf einer Mischung der ersten Empfangsstrahlung mit einer ersten Lokaloszillatorstrahlung beziehungsweise basierend auf einer Mischung der zweiten Empfangsstrahlung mit einer zweiten Lokaloszillatorstrahlung für eine Distanzmessung nach dem Prinzip eines modulierten Dauerstrichradars, und
   • Bestimmen wenigstens einer Distanz zum Ziel basierend auf dem ersten und dem zweiten Mischsignal,
   **dadurch gekennzeichnet, dass**
   • ein Parameter ($t_{TOIF}$) bestimmt wird, welcher indikativ ist für einen Frequenzoffset zwischen dem ersten (8A) und dem zweiten (8B) Modulationsband, und
   • der Parameter ($t_{TOIF}$) beim Bestimmen der wenigstens einen Distanz zum Ziel zum Ableiten eines Frequenzunterschieds (9) zwischen der ersten Frequenzmodulation (1A) und der zweiten Frequenzmodulation (1B) berücksichtigt wird.

2. Distanzmessverfahren nach Anspruch 1,
   **dadurch gekennzeichnet, dass**
   die zweite Frequenzmodulation mindestens einen Zeitabschnitt mit einer zur Modulationsrichtung der ersten Frequenzmodulation gegenläufigen, insbesondere entgegengesetzt verlaufenden, Modulationsrichtung aufweist.

3. Distanzmessverfahren nach Anspruch 1 oder 2,
   **dadurch gekennzeichnet, dass**
   der Parameter ($t_{TOIF}$) ein Kreuzungszeitpunkt ist, an dem die erste (1A) und die zweite (1B) Frequenzmodulation dieselbe Frequenz aufweisen.

4. Distanzmessverfahren nach Anspruch 3,
   **dadurch gekennzeichnet, dass**

der Kreuzungszeitpunkt ($t_{TOIF}$) aus einem Interferenzverlauf (10) einer Überlagerung von zumindest einem Teil der ersten und zumindest einem Teil der zweiten Laserstrahlung bestimmt wird, insbesondere basierend auf einem Schwellenwert (11) für die Interferenzsignalstärke des Interferenzverlaufs (10).

5. Distanzmessverfahren nach einem der vorangehenden Ansprüche,
**dadurch gekennzeichnet, dass**

• eine Referenzierung des Frequenzverlaufs der ersten und/oder der zweiten Frequenzmodulation bezüglich eines Referenzparameters eines Referenzinterferometers erfolgt, und
• basierend auf der Referenzierung beim Bestimmen der wenigstens einen Distanz Nichtlinearitäten beim Erzeugen der ersten und/oder der zweiten Frequenzmodulation kompensiert werden.

6. Distanzmessverfahren nach einem der vorangehenden Ansprüche,
**dadurch gekennzeichnet, dass**
der Frequenzunterschied (9) zwischen der ersten (1A) und der zweiten (1B) Frequenzmodulation basierend auf dem Parameter ($t_{TOIF}$), welcher indikativ ist für einen Frequenzoffset zwischen dem ersten (8A) und dem zweiten (8B) Modulationsband, sowie einem ersten Verlaufsparameter (13A) bezüglich der ersten Frequenzmodulation (1A) und einem zweiten Verlaufsparameter (13B) bezüglich der zweiten Frequenzmodulation (1B) bestimmt wird, insbesondere wobei der erste Verlaufsparameter (13A) indikativ ist für einen Gradienten der ersten Frequenzmodulation (1A) und/oder der zweite Verlaufsparameter (13B) indikativ ist für einen Gradienten der zweiten Frequenzmodulation (1B) .

7. Distanzmessverfahren nach einem der vorangehenden Ansprüche,
**dadurch gekennzeichnet, dass**
das Bestimmen der wenigstens einen Distanz während eines Messintervalls (5) erfolgt, wobei das Messintervall (5) und die erste (1A) und die zweite (1B) Frequenzmodulation derart aufeinander abgestimmt sind, dass die erste und die zweite Sendestrahlung während des Messintervalls (5) jeweils eine im Wesentlichen lineare Frequenzmodulation aufweisen.

8. Distanzmesser mit

• einer Laserstrahlquelle konfiguriert zum Erzeugen einer ersten und einer zweiten Laserstrahlung, wobei

◦ die erste Laserstrahlung eine ein erstes Modulationsband (8A) definierende erste Frequenzmodulation (1A) aufweist, und
◦ die zweite Laserstrahlung eine ein zweites Modulationsband (8B) definierende zweite Frequenzmodulation (1B) aufweist, wobei zumindest zeitabschnittsweise ein Gradient der ersten Frequenzmodulation (1A) unterschiedlich ist zu einem Gradienten der zweiten Frequenzmodulation (1B),

• einem Sendepfad konfiguriert zum gleichzeitigen Aussenden von zumindest einem Teil der ersten und von zumindest einem Teil der zweiten Laserstrahlung als erste beziehungsweise als zweite Sendestrahlung zum Ziel,
• einem Empfänger konfiguriert zum Empfangen von zumindest einem Teil der vom Ziel zurückkommenden ersten und von zumindest einem Teil der vom Ziel zurückkommenden zweiten Sendestrahlung als erste beziehungsweise als zweite Empfangsstrahlung,
• einem Mischer konfiguriert zum Erzeugen eines ersten und eines zweiten Mischsignals basierend auf einer Mischung der ersten Empfangsstrahlung mit einer ersten Lokaloszillatorstrahlung beziehungsweise basierend auf einer Mischung der zweiten Empfangsstrahlung mit einer zweiten Lokaloszillatorstrahlung für eine Distanzmessung nach dem Prinzip eines modulierten Dauerstrichradars, und
• eine Recheneinheit konfiguriert zum Bestimmen wenigstens einer Distanz zum Ziel basierend auf dem ersten und dem zweiten Mischsignal,

**dadurch gekennzeichnet, dass**
die Recheneinheit konfiguriert ist

• einen Parameter ($t_{TOIF}$) zu bestimmen, welcher indikativ ist für einen Frequenzoffset zwischen dem ersten (8A) und dem zweiten (8B) Modulationsband, und
• um den Parameter ($t_{TOIF}$) beim Bestimmen der wenigstens einen Distanz zum Ziel zum Ableiten eines Frequenzunterschieds (9) zwischen der ersten Frequenzmodulation (1A) und der zweiten Frequenzmodulation (1B) zu berücksichtigen.

**9.** Distanzmesser nach Anspruch 8,
**dadurch gekennzeichnet, dass**
die zweite Frequenzmodulation mindestens einen Zeitabschnitt mit einer zur Modulationsrichtung der ersten Frequenzmodulation gegenläufigen, insbesondere entgegengesetzt verlaufenden, Modulationsrichtung aufweist.

**10.** Distanzmesser nach Anspruch 8 oder 9,
**dadurch gekennzeichnet, dass**
der Parameter ($t_{TOIF}$) ein Kreuzungszeitpunkt ist, an dem die erste (1A) und die zweite (1B) Frequenzmodulation dieselbe Frequenz aufweisen.

**11.** Distanzmesser nach Anspruch 10,
**dadurch gekennzeichnet, dass**

- der Distanzmesser eine Interferometeranordnung aufweist, konfiguriert zum Erzeugen eines Interferenzverlaufs (10) einer Überlagerung von zumindest einem Teil der ersten und zumindest einem Teil der zweiten Laserstrahlung, und
- die Recheneinheit konfiguriert ist, den Kreuzungszeitpunkt ($t_{TOIF}$) aus dem Interferenzverlauf (10) zu bestimmen.

**12.** Distanzmesser nach Anspruch 11,
**dadurch gekennzeichnet, dass**
auf der Recheneinheit ein Schwellenwert (11) für die Interferenzsignalstärke des Interferenzverlaufs (10) hinterlegt ist, insbesondere einstellbar ist, und der Kreuzungszeitpunkt ($t_{TOIF}$) basierend auf dem Schwellenwert (11) und dem Interferenzverlauf (10) bestimmt wird.

**13.** Distanzmesser nach einem der Ansprüche 8 bis 12,
**dadurch gekennzeichnet, dass**

- der Distanzmesser ein Referenzinterferometer aufweist, das konfiguriert ist zum Durchführen einer Referenzierung des Frequenzverlaufs der ersten (1A) und/oder der zweiten (1B) Frequenzmodulation bezüglich eines Referenzparameters des Referenzinterferometers, und
- die Recheneinheit konfiguriert ist, basierend auf der Referenzierung beim Bestimmen der wenigstens einen Distanz Nichtlinearitäten beim Erzeugen der ersten (1A) und/oder der zweiten (1B) Frequenzmodulation zu kompensieren.

**14.** Distanzmesser nach einem der Ansprüche 8 bis 13,
**dadurch gekennzeichnet, dass**

- auf der Recheneinheit ein erster Verlaufsparameter (13A) bezüglich der ersten Frequenzmodulation (1A) und ein zweiter Verlaufsparameter (13B) bezüglich der zweiten Frequenzmodulation (1B) hinterlegt sind, und
- die Recheneinheit konfiguriert ist, den Frequenzunterschied (9) zwischen der ersten (1A) und der zweiten (1B) Frequenzmodulation basierend auf dem Parameter ($t_{TOIF}$), welcher indikativ ist für einen Frequenzoffset zwischen dem ersten (8A) und dem zweiten (8B) Modulationsband, sowie dem ersten (13A) und dem zweiten (13B) Verlaufsparameter zu bestimmen.

**15.** Distanzmesser nach einem der Ansprüche 8 bis 14,
**dadurch gekennzeichnet, dass**
der Distanzmesser konfiguriert ist

- einen dritten Verlaufsparameter (13A) bezüglich der ersten Frequenzmodulation und einen vierten Verlaufsparameter (13B) bezüglich der zweiten Frequenzmodulation zu bestimmen, und
- den Frequenzunterschied (9) zwischen der ersten (1A) und der zweiten (1B) Frequenzmodulation basierend auf dem Parameter ($t_{TOIF}$), welcher indikativ ist für einen Frequenzoffset zwischen dem ersten (8A) und dem zweiten (8B) Modulationsband, sowie dem dritten (13A) und dem vierten (13B) Verlaufsparameter zu bestimmen.

**Fig.1**

**Fig.2**

**Fig.3a**

**Fig.3b**

**Fig.4**

**Fig.5**

**Fig.6**

**Europäisches Patentamt**
**European Patent Office**
**Office européen des brevets**

## EUROPÄISCHER RECHERCHENBERICHT

Nummer der Anmeldung

EP 18 17 7135

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2011/205523 A1 (REZK MINA [US] ET AL) 25. August 2011 (2011-08-25)<br>* Absätze [0001], [0031] - Absatz [0043]; Abbildungen 2,3 *<br>----- | 1,2,5-9, 14,15<br>3,4, 10-12 | INV.<br>G01S17/32<br>G01S7/497 |
| A | US 2017/146335 A1 (MARTINEZ JUAN JOSE [GB] ET AL) 25. Mai 2017 (2017-05-25)<br>* Zusammenfassung; Abbildung 5 *<br>----- | 1-15 | |
| A | FR 2 965 064 A1 (ONERA (OFF NAT AEROSPATIALE) [FR])<br>23. März 2012 (2012-03-23)<br>* Zusammenfassung; Abbildungen 2a, 2b *<br>----- | 1-15 | |
| A | US 2010/321668 A1 (UENO TATSUYA [JP])<br>23. Dezember 2010 (2010-12-23)<br>* Zusammenfassung; Abbildungen 1,2,11,12 *<br>----- | 1-15 | |
| A | JP H09 257415 A (SENSHIN ZAIRYO RIYOU GAS JIENE) 3. Oktober 1997 (1997-10-03)<br>* Zusammenfassung; Abbildungen 3,4 *<br>----- | 1-15 | **RECHERCHIERTE SACHGEBIETE (IPC)** |
| A | US 2011/051146 A1 (JENSEN THOMAS [CH] ET AL) 3. März 2011 (2011-03-03)<br>* Zusammenfassung; Abbildung 2 *<br>----- | 1-15 | G01S |

Der vorliegende Recherchenbericht wurde für alle Patentansprüche erstellt

| Recherchenort | Abschlußdatum der Recherche | Prüfer |
|---|---|---|
| München | 5. Dezember 2018 | Rudolf, Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 17 7135

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2018

| Im Recherchenbericht angeführtes Patentdokument | Datum der Veröffentlichung | Mitglied(er) der Patentfamilie | Datum der Veröffentlichung |
|---|---|---|---|
| US 2011205523 A1 | 25-08-2011 | CN 102150007 A<br>EP 2329218 A2<br>JP 5752040 B2<br>JP 2012502301 A<br>JP 2015111160 A<br>US 2011205523 A1<br>WO 2010030884 A2 | 10-08-2011<br>08-06-2011<br>22-07-2015<br>26-01-2012<br>18-06-2015<br>25-08-2011<br>18-03-2010 |
| US 2017146335 A1 | 25-05-2017 | CN 106687762 A<br>EP 3161408 A1<br>GB 2529752 A<br>JP 2017523403 A<br>US 2017146335 A1<br>WO 2015198044 A1 | 17-05-2017<br>03-05-2017<br>02-03-2016<br>17-08-2017<br>25-05-2017<br>30-12-2015 |
| FR 2965064 A1 | 23-03-2012 | FR 2965064 A1<br>WO 2012038662 A1 | 23-03-2012<br>29-03-2012 |
| US 2010321668 A1 | 23-12-2010 | CN 101281031 A<br>JP 5530069 B2<br>JP 2008275594 A<br>KR 20080090317 A<br>TW 200912354 A<br>US 2010321668 A1 | 08-10-2008<br>25-06-2014<br>13-11-2008<br>08-10-2008<br>16-03-2009<br>23-12-2010 |
| JP H09257415 A | 03-10-1997 | JP 2954871 B2<br>JP H09257415 A | 27-09-1999<br>03-10-1997 |
| US 2011051146 A1 | 03-03-2011 | AU 2009266433 A1<br>CA 2723346 A1<br>CN 102047071 A<br>EP 2128561 A1<br>US 2011051146 A1<br>WO 2010000044 A2 | 07-01-2010<br>07-01-2010<br>04-05-2011<br>02-12-2009<br>03-03-2011<br>07-01-2010 |

EPO FORM P0461

Für nähere Einzelheiten zu diesem Anhang : siehe Amtsblatt des Europäischen Patentamts, Nr.12/82